# EUROPEAN PATENT SPECIFICATION

(11) **EP 1 408 659 B1**
(45) Date of publication and mention of the grant of the patent: **26.03.2008**
(21) Application number: 03022614.6
(22) Date of filing: 06.10.2003
(51) Int. Cl.: H04L 12/56

(54) **Routing control system, routing control device, transfer device and routing control method**
Steuersystem für Leitweglenkung, Steuervorrichtung für Leitweglenkung, Übertragungsvorrichtung und Steuerverfahren für Leitweglenkung
Sisteme de commande de routage, dispositif de commande de routage, dispositif de transfert et procédé de commande de routage

(30) Priority: 07.10.2002 JP 2002294036
(43) Date of publication of application: 14.04.2004
(73) Proprietor: NTT DoCoMo, Inc., Tokyo 100-6150 (JP)
(72) Inventor: Jo,Manhee, NTT DoCoMo, Inc., Chiyoda-ku, Tokyo 100-6150 (JP); Nishida, Katsutoshi, NTT DoCoMo, Inc., Chiyoda-ku, Tokyo 100-6150 (JP); Okagawa, Takatoshi, NTT DoCoMo, Inc., Chiyoda-ku, Tokyo 100-6150 (JP); Shinagawa, Noriteru, NTT DoCoMo, Inc., Chiyoda-ku, Tokyo 100-6150 (JP)
(74) Representative: Grosse, Wolfgang

(56) References cited:
- EP-A- 0 753 952
- US-A- 4 771 424
- US-A- 5 381 403
- US-A1- 2002 027 887

## Description

### BACKGROUND OF THE INVENTION

### Field of the Invention

The present invention relates to routing control system, routing control device, transfer device and routing control method.

### Related Background Art

In a conventional internet, the routing control functions and the transfer control functions of the network are intermingled in the transfer devices in the network and each transfer device transfers packets based on the routing control information built up and possessed individually. The routing control information by which a transfer device decides whether transfer devices exchange packets or not, can also be built up by negotiation among the network managers. Basically however, since the control information is established by information exchanges among transfer devices, or route calculations by the respective transfer devices, only the transfer devices can grasp all the routing information.

Also, regarding the quality control aspect, the Internet basically controls applications rather than the network, so the quality is controlled by controlling the amount of input data of the upper-layer applications. Apart from this, when it is necessary to specify the transfer route for reasons such as security or traffic engineering, in the existing Internet, part of the transfer route is controlled by specifying some of the transfer devices that are to be passed through by the end terminal. As related technical references, there may be mentioned for example Laid-open Japanese Patent No. 2000-209264 and the reference "Mark Miller, Implementing IPv6 second edition, 2000 pp. 44-47".

However, since each transfer device in the network has both routing control functions and transfer control functions, it is difficult to expand or delete routing control functions and the mixture of different routing control functions present in the network makes the control of the network complicated. Also, since the transfer devices transfers packets based on their individual routing control information, the overall route by which the packets will be transferred cannot be predicted. Consequently, since only transfer devices on the edge of the network, such as gateways or access routers, can be controlled in order to perform network control within the network, work control within the network, there is the problem that the load of packet transfer cannot be efficiently distributed in the entire network.

Also, from the point of view of quality management, since, as described above, in the Internet, control for the network is not executed but control for end-to-end applications is executed, even if the quality of the traffic changes due to conditions on the network, control only for the applications is executed. There is therefore the problem that in cases where a specific link on the network is congested, it is impossible to avoid the link. Apart from this, even in cases where it is necessary to specify the transfer route due to reasons such as security, with the existing Internet, there is the problem that, although it is possible to specify the route through which transfer should take place at the end terminal, it is not possible to specify routes through which transfer should not take place regarding the network.

Document US 2002/027887 discloses to calculate a routing table by a master base station and to deliver the table to a sum of slave base stations. Each station itself decides about the path a packet is transmitted through.

Document EP 0 915 594 discloses to calculate a routing path by a central routing processor. The document does not disclose to change the routing path after it has once been ascertained.

Document EP 0 753 952 discloses a route management system included in a packet communications network in which pre-calculated routes can be remotely changed due to failures or congestion. The route controller of one of a sum of Agent nodes will attempt to create a new route, if information regarding to the actual path of a packet is changed by a Manager Node.

In view of the above, an object of the present invention is to provide a routing control system, whereby the function of transfer devices can be more simplified and more efficient, the transfer routes of packets can be grasped and designated appropriately and the transfer routes of packets can be adjusted dynamically.

### SUMMARY OF THE INVENTION

The above objects are fulfilled according to this invention, by a routing control system disclosed in claims 1 and 2.

A routing control system according to the present invention comprises transfer devices that perform transfer control processing and a routing control device to which the transfer devices are connected, wherein the routing control device has routing control information and transmits the routing control information to the transfer devices and the transfer devices perform the transfer control processing of packets based on the routing control information transmitted from the routing control device.

Furthermore, in a routing control method according to the present invention, transfer devices that perform transfer control processing and a routing control device to which the transfer devices are connected, are employed, the routing control device transmits the routing control information which is possessed by itself, to the transfer devices, and the transfer devices perform transfer control processing of packets based on the routing control information transmitted from the routing control device.

With both the routing control system and routing control method according to the present invention, the routing control device transmits the routing control information possessed by this routing control device to the transfer devices and the transfer devices perform packet transfer control processing based on the routing control information transmitted from the routing control device. In this way, routing control processing and transfer control processing are separated, the routing control processing being performed by the routing control device and the transfer control processing being performed by the transfer devices. Therefore the transfer devices do not need to have the capability of the complicated calculation for generating routing control information, so the functions of the transfer devices connected to the routing control device can be more simplified and more efficient. Also, since the routing control device has the routing control information, the routes through which the packets pass can easily be grasped and designated by the routing control device.

Preferably also in a routing control system according to the present invention the routing control device has a routing control table which holds routing control information. Also, preferably in the routing control method according to the present invention the routing control device has a routing control table which holds routing control information.

Preferably also in the routing control system according to the present invention the routing control device predicts the packet transfer routes using the routing control information. Also, in the routing control method according to the present invention, preferably the routing control device predicts the packet transfer routes using the routing control information.

Preferably also in the routing control system according to the present invention, the routing control device transmits the routing control information necessary for transfer devices on the packet transfer routes, to the transfer devices. Also preferably in the routing control method according to the present invention the routing control device transmits the routing control information necessary for transfer devices on the packet transfer routes, to the transfer devices.

Also preferably in the routing control system according to the present invention the transfer devices comprise storage means that stores the routing control information transmitted from the routing control device. If this is done, the routing control information transmitted from the routing control device can be reliably held by the transfer devices.

Preferably also in a routing control system according to the present invention, in cases where the transfer devices do not have routing control information, they request transmission of routing control information thereto from the routing control device. Also preferably in a routing control method according to the present invention in cases where the transfer devices do not have routing control information, they request transmission of routing control information thereto from the routing control device. If this is done, the transfer devices can respectively receive routing control information thereto appropriately.

Preferably also in a routing control system according to the present invention, when the routing control device receives a request for transmission of routing control information from a transfer device, the routing control device transmits routing control information to the transfer device which requested this transmission. Preferably also in a routing control method according to the present invention, when the routing control device receives a request for transmission of routing control information from a transfer device, the routing control device transmits routing control information to the transfer device which requested this transmission. If this is done, the routing control device can respectively transmit routing control information to the transfer devices appropriately.

A routing control device according to the present invention is a routing control device to which transfer devices that perform transfer control processing are connected, wherein the routing control device has routing control information relating to packet transfer routes and transmits the routing control information to the transfer devices.

Since in a routing control device according to the present invention, the routing control information is transmitted from the routing control device to the transfer devices, the transfer devices do not need to have the capability of the complicated calculation for generating routing control information and the functions of the transfer devices connected with this routing control device can thereby be more simplified and more efficient. Also, since the routing control device has the routing control information, the route through which the packets are passed can easily be grasped and designated by the routing control device.

Preferably also in a routing control device according to the present invention, the routing control device has a routing control table which holds routing control information.

Also preferably in a routing control device according to the present invention, the routing control device predicts the packet transfer routes based on the routing control information.

Also preferably in a routing control device according to the present invention, the routing control device transmits the routing control information necessary for transfer devices on the packet transfer routes, to the transfer devices.

Also preferably in a routing control device according to the present invention, when the routing control device receives a request for transmission of routing control information from a transfer device, the routing control device transmits routing control information to the transfer device which requested this transmission. If this is done, routing control information can be transmitted to the transfer devices by the routing control device appropriately.

A transfer device according to the present invention is a transfer device that performs transfer control processing of packets based on routing control information transmitted from a routing control device connected therewith.

With a transfer device according to the present invention, packet transfer control processing is performed based on the routing control information transmitted from the routing control device connected therewith. Consequently, the transfer devices do not need to have the capability of the complicated calculation for generating routing control information and the functions of the transfer devices connected with the routing control device can thereby be more simplified and more efficient.

Preferably also in a transfer device according to the present invention, in cases where the transfer device does not have routing control information, it requests transmission of routing control information thereto from the routing control device. If this is done, the transfer device can receive routing control information from the routing control device appropriately.

Preferably also a transfer device according to the present invention comprises storage means that stores the routing control information transmitted from the routing control device. In this case, the routing control information transmitted from the routing control device can be reliably held by the transfer device.

### BRIEF DESCRIPTION OF THE DRAWINGS

Figure 1 is a diagram showing the configuration of a communication system according to an embodiment;

Figure 2 is a block diagram given in explanation of the configuration of a transfer device;

Figure 3 is a flow chart given in explanation of packet transfer processing in a transfer device;

Figure 4 is a block diagram given in explanation of the configuration of a routing control device;

Figure 5 is a view given in explanation of the configuration of a routing control table;

Figure 6 is a flow chart given in explanation of routing control information transmission processing in a routing control device;

Figure 7 is a view given in explanation of an example of the operation of a communication system;

Figure 8 is a view given in explanation of an example of the operation of a communication system;

Figure 9 is a view given in explanation of an example of the operation of a communication system;

Figure 10 is a view given in explanation of an example of the operation of a communication system;

Figure 11 is a view given in explanation of an example of the operation of a communication system;

### DESCRIPTION OF THE PREFERRED EMBODIMENTS

A routing control system, a routing control device, transfer devices and method of routing control according to an embodiment of the present invention, are described below with reference to the drawings. In the description, identical elements or elements having the same function are given the same reference symbols and further description thereof is omitted.

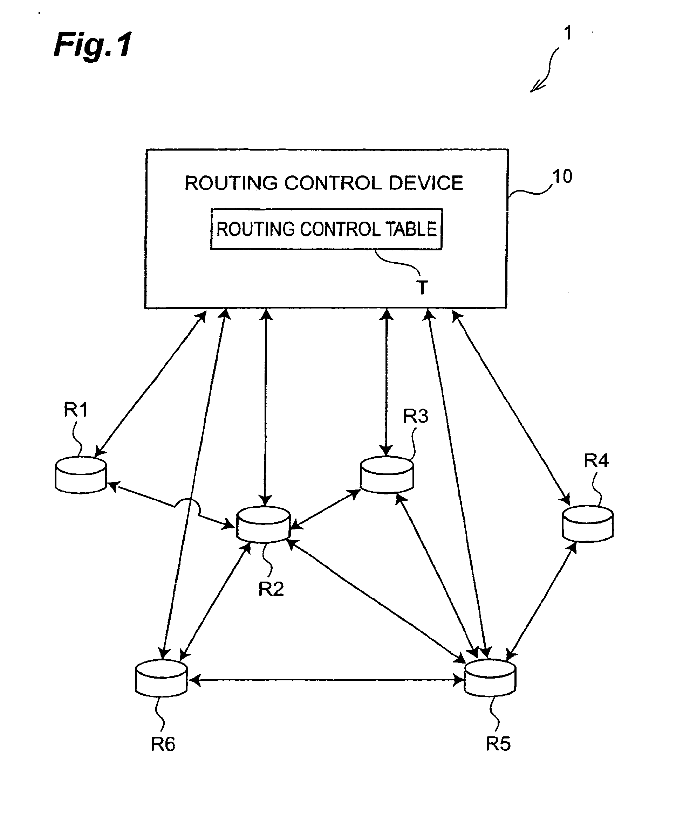

Figure 1 is a diagram showing the configuration of a communications system according to the embodiment. As shown in Figure 1, the communication system 1 includes a plurality of transfer devices R1-R6 and a routing control device 10.

Each of the transfer devices R1-R6 transfers packets by performing transfer control processing and is physically connected with an adjacent transfer device. In this embodiment, for example the transfer device R1 is physically connected with the transfer device R2 and the transfer device R2 is physically connected with the transfer devices R3, R5 and R6. Likewise, the transfer device R3 is physically connected with the transfer devices R2, R5 and the transfer device R4 is physically connected with the transfer device R5. Also, the transfer device R5 is physically connected with the transfer devices R2, R3 and R4 and the transfer device R6 is physically connected with the transfer device R2.

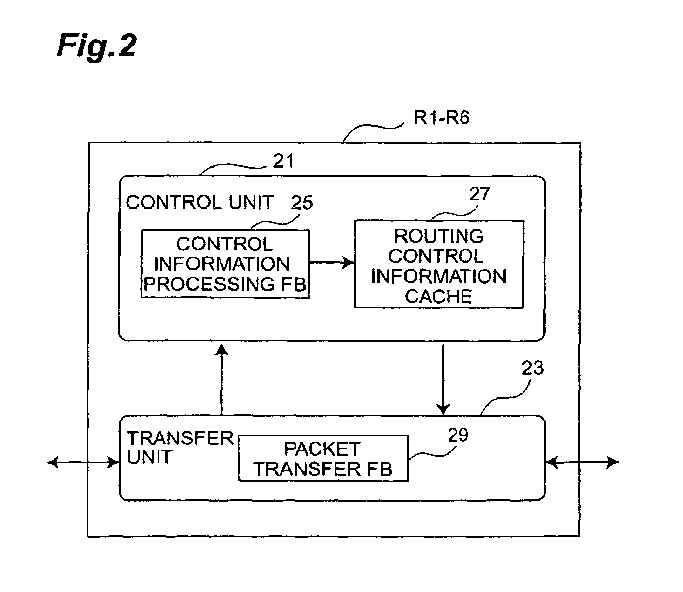

As shown in Figure 2, each of the transfer devices R1-R6 is constituted comprising a control unit 21 and a transfer unit 23. The control unit 21 comprises a control information processing function block (FB) 25 and storage means constituted by a routing control information cache 27. The transfer unit 23 comprises a packet transfer function block (FB) 29. The transfer unit 23 sends and receives information to/from other transfer devices that are physically connected therewith (such as connection information with adjacent transfer devices, routing information and network control information) and routing control information to/from the routing control device 10. The transfer unit 23 sends the input adjacency information, routing information and routing control information to the control unit 21. When routing control information relating to the transfer route of the packets is sent to the control unit 21, the control information processing function block 25 stores the routing control information that has been sent, in a routing control information cache 27. A packet transfer function block 29 of the transfer unit 23 transfers packets based on the routing control information stored in the routing control information cache 27 of the control unit 21. The aforementioned connection information includes for example the identifier information of adjacent transfer devices and subnet information; the routing information includes for example the metric information and the control information includes for example information regarding security or a contract or the like relating to the network.

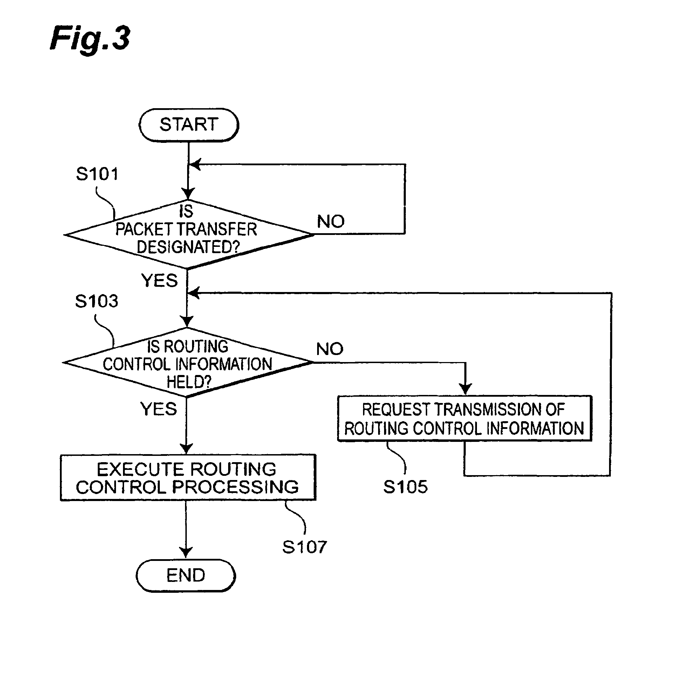

Each of the transfer devices R1-R6 performs packet transfer processing in accordance with the flow chart shown in Figure 3. First of all, each of the transfer devices R1-R6 ascertains (S101) whether transfer instructions relating to incoming packets have been issued from the routing control device 10 or not. If transfer instructions are enabled regarding the packets, each of the transfer devices R1-R6 determines (S103) whether the routing control information is held or not, i.e. whether routing control information is stored in the routing control information cache 27 or not. If routing control information is not held, each of the transfer devices R1-R6 requests (S105) transmission of routing control information from the routing control device 10. If such routing control information is in fact held, due to transmission of routing control information from the routing control device 10, each of the transfer devices R1-R6 performs routing processing (S107) of packets based on this routing control information.

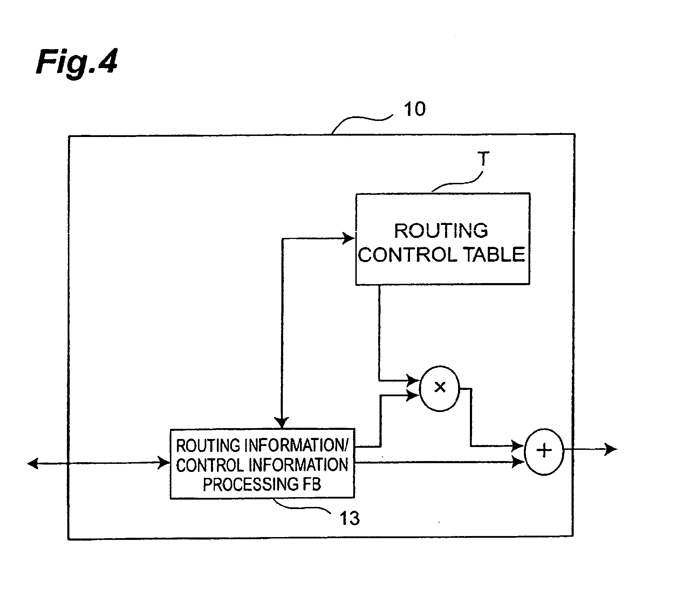

The routing control device 10 is physically connected with each of the transfer devices R1-R6 and comprises a routing control table T. As shown in Figure 4, this routing control device 10 physically includes a routing information/control information processing function block (FB) 13 and the routing control table T. The routing information/control information processing function block (FB) 13 calculates the information (routing control information relating to the transfer route of the packets) of the transfer devices R1-R6 contained in the routing control table T. The routing information/control information processing function block (FB) 13 then sends this information to the corresponding transfer device R1-R6. The routing control information that is thus sent to the transfer devices R1-R6 is the routing control information that is necessary for transmission of packets by the transfer device R1-R6 in question. Also, the routing information/control information processing function block (FB) 13 inputs and outputs the routing information and control information of the transfer devices R1-R6 and calculates the optimum control points (transfer devices) by referring to the routing control information included in the routing control table T. As a result of this calculation, the routing information/control information processing function block (FB) 13 is able to output instructions for the transfer processing of packets to the optimum transfer devices. The routing control device 10 is thereby able to predict the transfer route of the packets by using the routing control table T (routing control information) and transmits the routing control information required by the transfer devices R1-R6 in question to the transfer devices R1-R6 on the transfer route of the packets.

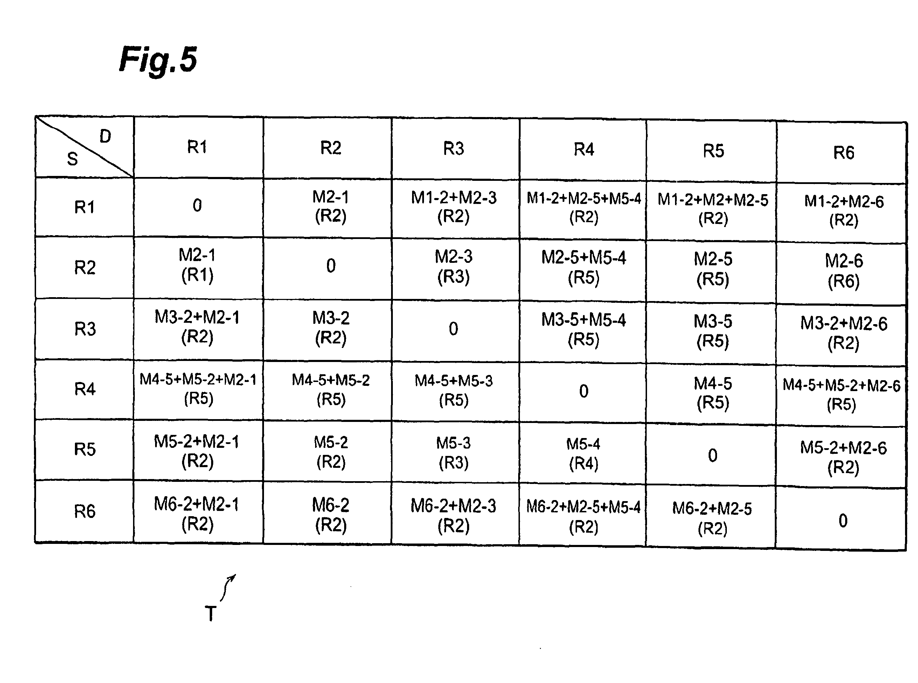

As shown in Figure 5, each of the entries of the routing control table T includes the initial transfer device and the cost (metric) when packets are transferred from the sending transfer device to the receiving transfer device. In Figure 5, "S" indicates the sending transfer device and "D" indicates the receiving transfer device. "Mi-j" indicates the cost of the link that directly physically connects the transfer device i and the transfer device j, and "Rk" indicates transference of packets to the transfer device k as the initial transfer device.

For example, the sending transfer device R1 and receiving transfer device R3 are not physically directly connected, but the sending transfer device R1 and receiving transfer device R3 can be connected through the transfer device R2. Therefore the transfer device to which the packets are initially sent is "R2 (k=2)" and the cost between the sending transfer device R1 and receiving transfer device R3, is the sum of the cost "M1-2" between the transfer device R1 and transfer device R2 and the cost "M2-3" between the transfer device R2 and transfer device R3. Consequently, as shown in Figure 5, "M1-2+M2-3" is recorded in the entry specified by the sending transfer device R1 and receiving transfer device R3 as the total cost from the transfer device R1 to the transfer device R3 and "R2" is recorded as the initial transfer device.

By retracing the entries of this routing control table T, it is possible to predict the route by which packets are transferred and, by also referring to the cost function, a route can be specified based on the condition of the network. The routing control table T can be generated from the routing information such as topology information transmitted from the transfer devices R1-R6 and collected by the routing control device 10.

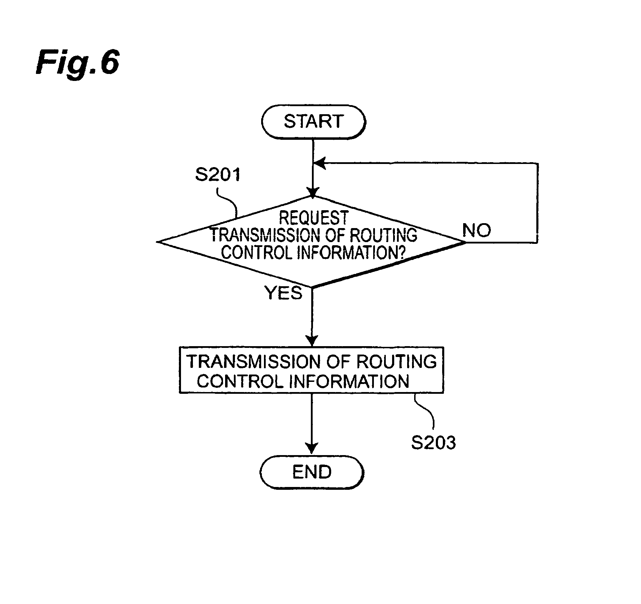

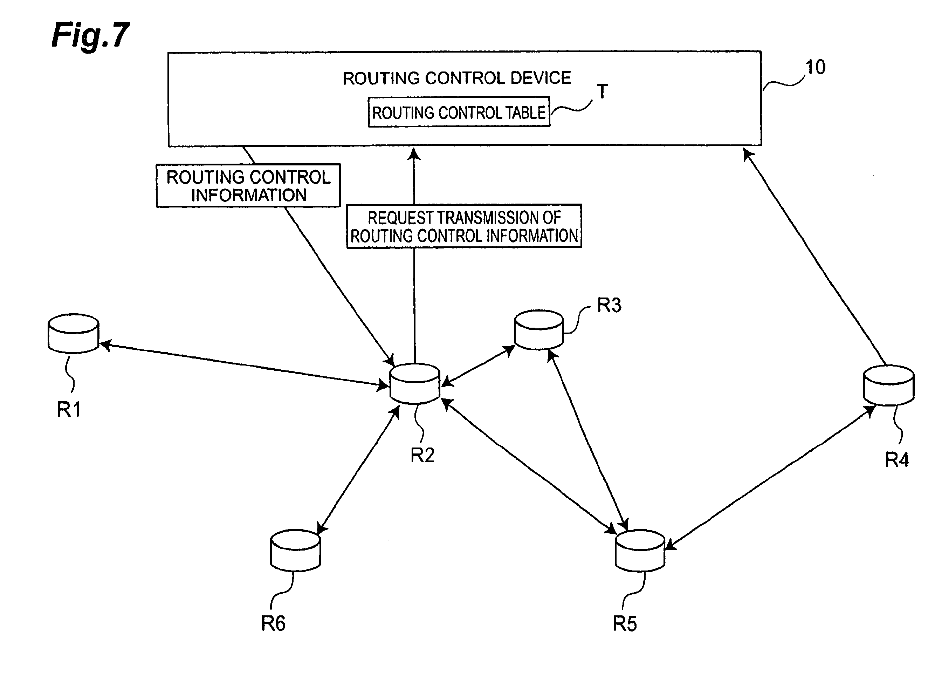

The routing control device 10 per forms routing control information transmission processing (routing control processing) in accordance with the flow chart shown in Figure 6. First of all, the routing control device 10 determines (S201) whether a request for transmission of routing control information has arrived from any of the transfer devices R1-R6 or not. If a request for transmission of routing control information has indeed arrived, the routing control device 10 transmits (S203) the cost and initial transfer device contained in the corresponding entry of the routing control table T, to the transfer device which requested transmission of routing control information. In this way, as shown in Figure 7, when, for example, a request for transmission of routing control information is sent from the transfer device R2, from the information in the routing control table T, the information contained in the entry of the row of the sending-side transfer device "R2" in Figure 5, is transmitted as the routing control information.

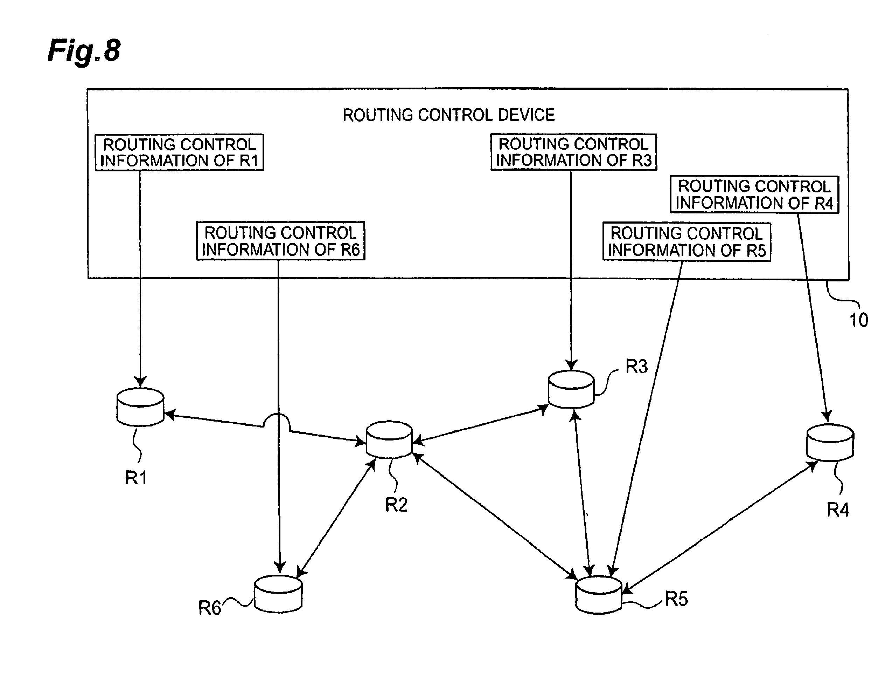

Also, as shown in Figure 8, the routing control device 10 may be arranged to respectively transmit the information contained in the routing control table T as routing control information, to the corresponding transfer devices R1-R6. In this case, from the information in the routing control table T, the information of the row of the sending-side transfer device "R1" in Figure 5, in which the transfer device R1 in question is the sending transfer device, is transmitted as routing control information to the transfer device R1. Likewise, the information of the row of the sending-side transfer device "R2" in Figure 5, in which the transfer device R2 in question is the sending transfer device, is transmitted as routing control information to the transfer device R2. Also, the information of the row of the sending-side transfer device "R3" in Figure 5, in which the transfer device R3 in question is the sending transfer device, is transmitted as routing control information to the transfer device R3. And the information of the row of the sending-side transfer device "R4" in Figure 5, in which the transfer device R4 in question is the sending transfer device, is transmitted as routing control information to the transfer device R4. And, the information of the row of the sending-side transfer device "R5" in Figure 5, in which the transfer device R5 in question is the sending transfer device, is transmitted as routing control information to the transfer device R5. Also the information of the row of the sending-side transfer device "R6" in Figure 5, in which the transfer device R6 in question is the sending transfer device, is transmitted as routing control information to the transfer device R6.

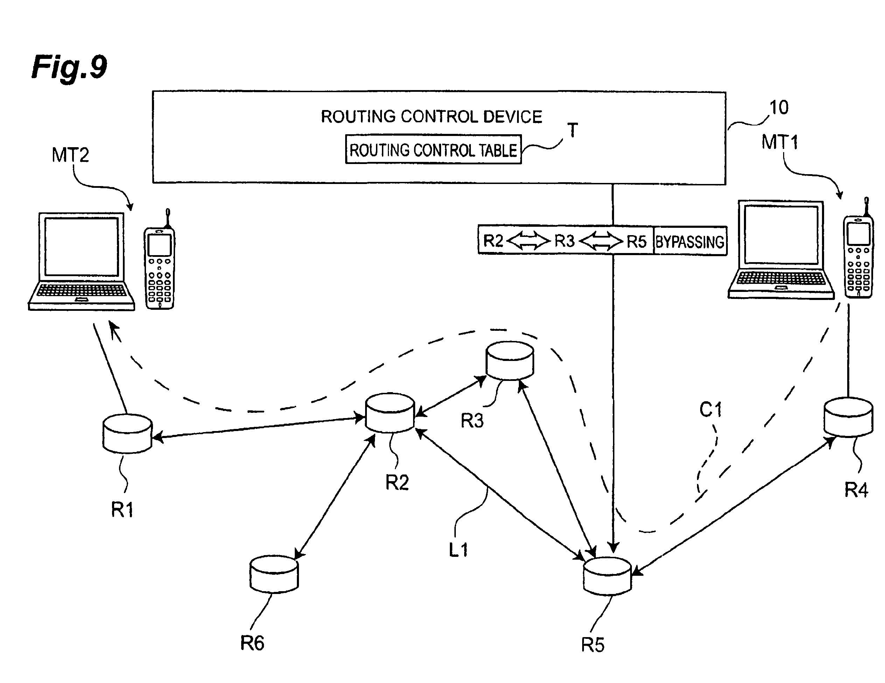

Next, the operation of a communication system 1 configured as above will be described with reference to Figure 9 to Figure 11.

First of all, an example will be described with reference to Figure 9 in which the routing control device 10 senses congestion of a physical link between the transfer devices R1-R6 and gives instructions to the corresponding transfer device for bypass processing of packets. The routing control device 10 can ascertain the congestion condition on each link by receiving congestion information transmitted from each of the transfer devices R1-R6. Also, as described above, since the routing control device 10 possesses the routing control table T, it has the essential information regarding the transfer route. Consequently, the routing control device 10, on learning that a specified link is in a congested condition, calculates a route bypassing this specified link by referring to the routing control table T and sends to the corresponding transfer device instructions to cause the packets to bypass this link.

For example, as shown in Figure 9, when packets are transmitted from the mobile terminal MT1 to the mobile terminal MT2, if the link L1 between the transfer device R5 and the transfer device R2 is in a congested condition, the routing control device 10 recognizes the fact that the link L1 is in a congested condition by using the adjacency information transmitted from the transfer device R5 and the transfer device R2. By referring to the routing control table T, the routing control device 10 then finds a bypass route through the transfer device R3 as the packet transfer route, and transmits routing control information to the transfer device R5, to the effect that packets for the transfer device R2 are to be transferred through the transfer device R3. As a result, the transfer device R5 transfers incoming packets to the transfer device R3 and so is able to send these packets to the transfer device R2 without passing through the congested link L1. As a result, packets are transmitted from the mobile terminal MT1 to the mobile terminal MT2 through the route C1 (transfer device R4 → transfer device R5 → transfer device R3 → transfer device R2 → transfer device R1).

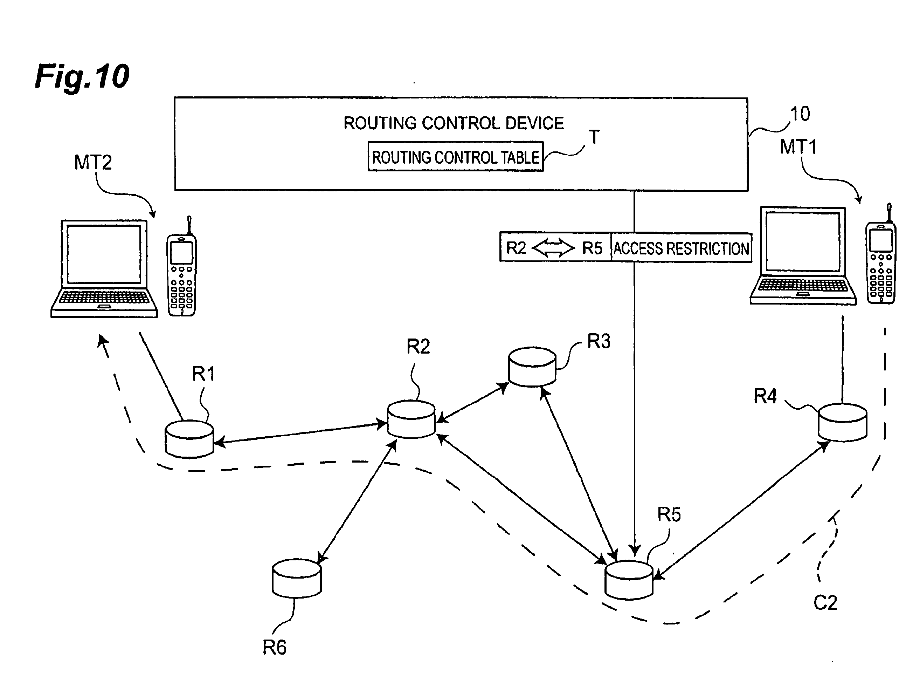

Next, referring to Figure 10, an example will be described in which the routing control device 10 has information such as security and contract information in respect of the network and gives instructions for the transfer route in respect of the transfer devices R1-R6 based on this information.

For example, referring to Figure 10, when the mobile terminal MT1 transmits packets to the mobile terminal MT2, if the routing control device 10 has information to prohibit transfer of packets to the transfer device R3 (restriction of access to the transfer device R3), the routing control device 10 finds, by referring to the routing control table T, as the transfer route of packets, a transfer route that does not pass through the transfer device R3 and then transmits to the transfer device R5 routing control information to the effect that packets are to be transferred to the transfer device R2. The transfer device R5 is thereby enabled to send incoming packets to the transfer device R2 instead of transferring them to the transfer device R3. As a result, transmission of packets from the mobile terminal MT1 to the mobile terminal MT2 is effected through the route C2 (transfer device R4 → transfer device R5 → transfer device R2 → transfer device R1).

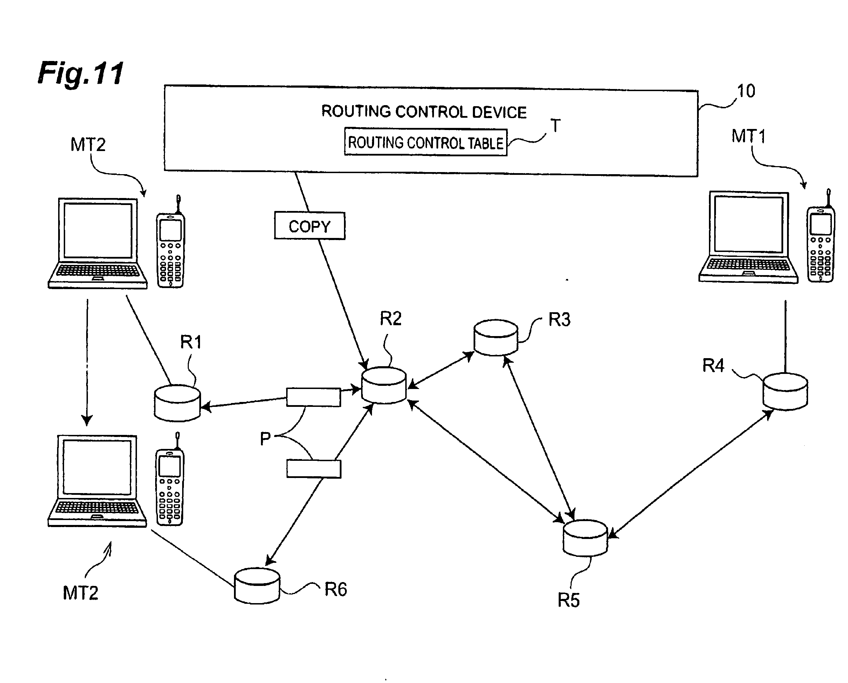

Next, referring to Figure 11, an example will be described in which the routing control device 10 has essential information regarding the packet transfer route, so that it performs soft handoff processing by issuing instructions for packet copying to the optimum transfer device.

For example, as shown in Figure 11, when packets are transmitted from the mobile terminal MT1 to the mobile terminal MT2, in the event of handoff involving movement of the mobile terminalMT2 to the area of control of a different transfer device (movement from under the control of the transfer device R1 to an area under the control of the transfer device R6), the routing control device 10 sends instructions for packet copying to the transfer device R2. The transfer device R2 is equipped with a function of interpreting the instructions from the routing control device 10 and copies the packets in accordance with instructions from the routing control device 10 and transfers copied packets P to the transfer device R1 and the transfer device R6. At this point, since the routing control device 10 has the essential information of the transfer route of the packets, by referring to the routing control table T, the routing control device 10 is able to predict which transfer device is suitable to be given instructions for copying and accordingly gives such instructions to the transfer device in question. As a result, the soft handoff when the mobile terminal MT2 moves can easily be processed.

As described above, in this embodiment, the routing control information possessed by the routing control device 10 in question is transmitted to the transfer devices by the routing control device 10 and packet transfer control processing is performed by the transfer devices R1-R6 based on the routing control information that is being transmitted thereto from the routing control device 10. In this way, the routing control processing and transfer control processing are separated, the routing control processing being performed by the routing control device 10 and the transfer control processing being performed by the transfer devices R1-R6. Therefore the transfer devices R1-R6 do not need to have the capability of the complicated calculation for generating routing control information, so the functions of the transfer devices R1-R6 connected to the routing control device 10 can be more simplified and more efficient.

Also, in this embodiment, since the routing control device 10 has routing control information (routing control table T), the routing control device 10 can easily grasp and give instructions concerning the route through which the packets pass. Also, since the routing control device 10 grasps the essential information as to the route whereby the packets are transferred, the routing control device 10 can give instructions for packet transfer control to the optimum transfer device on the route, based on the conditions of the network (for example the congestion condition on the links between the transfer devices R1-R6 and security and contract information regarding the network). Also, even in the case of handoff caused by movement of a mobile terminal MT2, the transfer route is predicted by the routing control device 10, so highly functional adaptation to handoff control can be achieved.

Also, in this embodiment, if each of the transfer devices R1-R6 has no rout ing control information, it requests transmission of routing control information thereto from the routing control device 10. In this way, each of the transfer devices R1-R6 can receive routing control information appropriately.

Also, in this embodiment, when the routing control device 10 receives a request for transmission of routing control information from any of the transfer devices R1-R6, the routing control device 10 transmits routing control information to the requesting transfer device. In this way, the routing control device 10 can transmit routing control information to the transfer devices R1-R6 appropriately.

Also, in this embodiment, each of the transfer devices R1-R6 has a routing control information cache 27 that stores routing control information transmitted from the routing control device 10. In this way, the routing control information transmitted from the routing control device 10 can be reliably held by each of the transfer devices R1-R6.

As described in detail above, with the present invention, there can be provided a routing control system, a routing control device, transfer devices and routing control method, whereby the function of the transfer devices can be more simplified and more efficient, and the packet transfer routes canbe appropriately grasped and appropriate instructions can be given concerning the packet transfer routes.

## Claims

1. A routing control system (1) comprising:
transfer devices (R1,...,R6) that perform transfer control processing, and a routing control device (10) to which said transfer devices (R1,...,R6) are connected,
wherein said transfer devices (R1,...,R6) are configured to perform said transfer control processing of packets based on said routing control information (T) transmitted from said routing control device (10),
**characterized in that**
said transfer devices (R1,...,R6) are configured to transmit congestion information indicating that a specified link is in a congested condition, to said routing control device (10),
wherein said routing control device (10), when learning that said specified link is in a congested condition, is configured to calculate a route bypassing said specified link by referring to a routing control table and send a routing control information (T) including instructions to transmit packets via said calculated route, to said transfer devices (R1,...,R6),
wherein said transfer control processing of packets is performed by said transfer devices (R1,...,R6) so as to transmit packets via said calculated route, and in cases where said transfer devices (R1,...,R6) do not have said routing control information (T), said transfer devices (R1,...,R6) are configured to request transmission of said routing control information (T) thereto from said routing control device (10).

2. A routing control system (1) according to the preamble of claim 1,
**characterized in that**
said routing control device (10), when prohibiting transfer of packets to a specified transfer device, is configured to calculate a route bypassing said specified transfer device by referring to a routing control table and send a routing control information (T) including instructions to transmit packets via said calculated route, to transfer devices (R1,...,R6) other than said specified transfer device,
wherein said transfer control processing of packets is performed by transfer devices (R1,...,R6) other than said specified transfer device so as to transmit packets via said calculated route, and
in cases where said transfer devices (R1,...,R6) do not have said routing control information (T), said transfer devices (R1,...,R6) are configured to request transmission of said routing control information (T) thereto from said routing control device (10).

## Patentansprüche

1. Routingsteuersystem (1), das Folgendes umfasst:
Übertragungsgeräte (R1, ..., R6), die eine Übertragungssteuerverarbeitung ausführen, und ein Routingsteuergerät (10), mit dem die Übertragungsgeräte (R1, ..., R6) verbunden sind, wobei die Übertragungsgeräte (R1, ..., R6) dafür konfiguriert sind, die Übertragungssteuerverarbeitung von Paketen anhand der Routingsteuerinformation (T), die von dem Routingsteuergerät (10) gesendet werden, auszuführen,
**dadurch gekennzeichnet, dass**
die Übertragungsgeräte (R1, ..., R6) dafür konfiguriert sind, an das Routingsteuergerät (10) Überlastungsinformationen zu senden, die anzeigen, dass sich eine bezeichnete Übertragungsverbindung in einem überlasteten Zustand befindet,
wobei das Routingsteuergerät (10), wenn es erfährt, dass sich die bezeichnete Übertragungsverbindung in einem überlasteten Zustand befindet, dafür konfiguriert ist, eine Route, welche die bezeichnete Übertragungsverbindung umgeht, unter Bezug auf eine Routingsteuertabelle zu berechnen und an die Übertragungsgeräte (R1, ..., R6) eine Routingsteuerinformation (T) zu senden, die Anweisungen enthält, Pakete über die berechnete Route zu senden,
wobei die Übertragungssteuerverarbeitung von Paketen durch die Übertragungsgeräte (R1, ..., R6) so ausgeführt wird, dass Pakete über die berechnete Route gesendet werden, und wobei in Fällen, wo die Übertragungsgeräte (R1, ..., R6) nicht über die Routingsteuerinformation (T) verfügen, die Übertragungsgeräte (R1, ..., R6) dafür konfiguriert sind, das Senden der Routingsteuerinformation (T) von dem Routingsteuergerät (10) zu den Übertragungsgeräten (R1, ..., R6) anzufordern.

2. Routingsteuersystem (1) nach dem Oberbegriff von Anspruch 1,
**dadurch gekennzeichnet, dass**
das Routingsteuergerät (10), wenn es die Übertragung von Paketen zu einem bezeichneten Übertragungsgerät verbietet, dafür konfiguriert ist, eine Route, die das bezeichnete Übertragungsgerät umgeht, unter Bezug auf eine Routingsteuertabelle zu berechnen und an andere Übertragungsgeräte (R1, ..., R6) als das bezeichnete Übertragungsgerät eine Routingsteuerinformation (T) zu senden, die Anweisungen enthält, Pakete über die berechnete Route zu senden,
wobei die Übertragungssteuerverarbeitung von Paketen durch andere Übertragungsgeräte (R1, ..., R6) als das bezeichnete Übertragungsgerät ausgeführt wird, um Pakete über die berechnete Route zu senden, und
wobei in Fällen, wo die Übertragungsgeräte (R1, ..., R6) nicht über die Routingsteuerinformation (T) verfügen, die Übertragungsgeräte (R1, ..., R6) dafür konfiguriert sind, das Senden der Routingsteuerinformation (T) von dem Routingsteuergerät (10) zu den Übertragungsgeräten (R1, ..., R6) anzufordern.

## Revendications

1. Système de commande de routage (1) comprenant :
des dispositifs de transfert (R1,...,R6) qui effectuent le traitement de commande de transfert, et un dispositif de commande de routage (10) auquel sont connectés lesdits dispositifs de transfert (R1,...,R6),
dans lequel lesdits dispositifs de transfert (R1,...,R6) sont configurés pour effectuer ledit traitement de commande de transfert de paquets en fonction des informations de commande de routage (T) transmises depuis ledit dispositif de commande de routage (10),
**caractérisé en ce que**,
lesdits dispositifs de transfert (R1,...,R6) sont configurés pour transmettre des informations de congestion indiquant audit dispositif de commande de routage (10) qu'une liaison spécifiée se trouve dans une condition de congestion,
dans lequel ledit dispositif de commande de routage (10), lorsqu'il apprend que ladite liaison spécifiée se trouve dans un état de congestion, est configuré pour calculer une voie de dérivation de ladite liaison spécifiée en se reportant à une table de commande de routage et pour envoyer aux dits dispositifs de transfert (R1,...,R6) une information de commande de routage (T) en incluant des instructions pour transmettre des paquets via ladite voie calculée,
dans lequel ledit traitement de commande de transfert des paquets est effectué par lesdits dispositifs de transfert (R1,...,R6) de façon à transmettre les paquets via ladite voie calculée, et dans les cas où lesdits dispositifs de transfert (R1,...,R6) n'auraient pas lesdites informations de commande de routage (T), lesdits dispositifs de transfert (R1,...,R6) sont configurés pour demander au dispositif de commande de routage (10) la transmission des dites informations de commande de routage (T).

2. Système de commande de routage (1) selon le préambule de la revendication 1,
**caractérisé en ce que**
lorsqu'il interdit le transfert de paquets à un dispositif de transfert spécifié, ledit dispositif de commande de routage (10) est configuré pour calculer une voie de dérivation dudit dispositif de transfert spécifié en se reportant à une table de commande de routage et pour envoyer une information de commande de routage (T) en incluant des instructions pour transmettre des paquets via la voie calculée, aux dispositifs de transfert (R1,...,R6) autres que ledit dispositif de transfert spécifié,
dans lequel ledit traitement de commande de transfert des paquets est effectué par les dispositifs de transfert (R1,...,R6) autres que ledit dispositif de transfert spécifié de façon à transmettre des paquets via ladite voie calculée, et
dans les cas où les dispositifs de transfert (R1,...,R6) n'auraient pas lesdites informations de commande de routage (T), lesdits dispositifs de transfert (R1,...,R6) sont configurés pour demander au dispositif de commande de routage (10) la transmission des dites informations de commande de routage (T).
